# EUROPÄISCHE PATENTSCHRIFT

(11) **EP 2 717 022 B1**
(45) Veröffentlichungstag und Bekanntmachung des Hinweises auf die Patenterteilung: **20.04.2016**
(21) Anmeldenummer: 13004823.4
(22) Anmeldetag: 08.10.2013
(51) Int. Cl.: G01D 5/20

(54) **Ereignisdetektor und Medikamentenspender mit solchem Ereignisdetektor**
Event detector and medication dispensing device with such an event detector
Détecteur d'évènements et distributeur de médicaments doté d'un tel détecteur d'évènements

(30) Priorität: 08.10.2012 DE 202012009560 U
(43) Veröffentlichungstag der Anmeldung: 09.04.2014
(73) Patentinhaber: Oechsler Aktiengesellschaft, 91522 Ansbach (DE)
(72) Erfinder: Heinz, Jürgen, 91583 Schillingsfürst (DE); Krauss, Norbert, 91522 Ansbach (DE)
(74) Vertreter: Führing, Dieter

(56) Entgegenhaltungen:
- EP-A2- 1 566 846
- DE-A1-102005 052 070
- DE-A1-102007 039 050
- DE-A1-102007 039 051
- DE-A1-102008 031 795

## Beschreibung

Die Erfindung betrifft einen Ereignisdetektor gemäß dem Oberbegriff des Patentanspruches 1, der insbesondere zum Einsatz bei einem Medikamentenspender ausgelegt ist.

Ein derartiger Ereignisdetektor ist aus der DE 10 2008 031 795 A1 mit einem Wiegand-Sensor in einer Verabreichungsvorrichtung bekannt, bei der es sich insbesondere um eine Injektionseinrichtung handelt. Die ist mit einer Anzeige und mit einer Schaltung in CMOS-Technologie für die Steuerung und zum Bereitstellen der anzuzeigenden Daten ausgestattet. Der Betrieb der Schaltung und der Anzeige erfolgt aus einer Energiequelle in Form einer Batterie oder eines Kondensators. Der Betrieb ist normalerweise abgeschaltet, um die Energiequelle zu schonen. Bei manuellem Betätigen der Einrichtung wird ein Permanentmagnet mit wechselnder Polarität am Sensor vorbeibewegt, mit der Folge, dass der einen kurzen Impuls generiert. Von dem wird behauptet, er genüge zum Aufladen des Kondensators als Energiequelle für Betrieb der Anzeige und ihrer Schaltung; der Impuls soll sogar ausreichen, um die Schaltung vorübergehend zu speisen - anschließend erlöscht auf jeden Fall die Anzeige. Aber die Impulslänge genügt jedenfalls, um die Schaltung mit ihrer Anzeige in Betrieb zu setzen. Dieser Betrieb bleibt danach aufrechterhalten, bis eine Zeitschaltuhr ihn wieder unterbricht. Dann bietet die Anzeige zwar keine Information mehr dar, aber die bleibt in der Schaltung nichtflüchtig gespeichert, um sie bei Bedarf extern abrufen zu können.

Bei einem Lüftermotor gemäß DE 10 2011 012 357 A1 ist der Umfang dessen Lüfterrades mit zwei einander diametral gegenüber gelegenen, radial orientierten stabförmigen Permanentmagneten bestückt, die zu abwechselndem permanentmagnetischem Aktivieren und Regenerieren eines Wieganddrahtes als dem Schaltelement gepolt sind. Eine das Schaltelement umgebende Sensorspule ist stationär in der Lüfterhaube angeordnet. Das dort zu erfassende Ereignis ist eine volle Umdrehung des Lüfterrades. Jeweils dann liefert die Sensorspule einen induzierten Ereignisimpuls, der zugleich der vorübergehenden Energieversorgung eines über eine serielle Schnittstelle auslesbaren nichtflüchtigen Zählerbausteines dient.

Eine Drehwinkel-Feinauflösung ist nach DE 10 2007 039 050 A1 oder DE 10 2007 039 051 A1 durch Einbau eines weiteren Sensors zusätzlich zu rotierenden Permanentmagneten möglich.

Gemäß der DE 10 2005 052 070 A1 wird für Identifikationsaufgaben ein dreidimensionales Bild autostereoskop erzeugt, indem das auf einer Anzeigeschicht dargebotene Bild durch eine darüber gelegene optische Schicht hindurch angeschaut wird. Dabei kann die Anzeigeschicht auf praktisch beliebige Weise mit dem zu betrachtenden Bild ausgestattet werden; nämlich gleichermaßen etwa durch bloßes Bedrucken, oder aber durch Ausbilden einer Matrixanzeige, eines elektrophoretischen, flüssigkristallinen oder elektrochromen Display, einer Drehmomentanzeige, einer OLED- oder einer LED-Anzeige beziehungsweise durch Bedrucken eines flexiblen Trägers mit leitfähigem Polymer. Speziell zur Technologie von ePapier auf Drehelement-Basis sind fast ein Dutzend Patente oder Anmeldungen durch Aufzählen lediglich ihrer Publikationsnummern zitiert.

Nach der EP 1 566 846 A2 ist ein optoelektronischer Chip auf den zentral gelegenen Trägerbereich eines vergossenen Leadframe montiert und an dagegen isolierte, aus dem Verguss herausgeführte Anschlüsse gebondet. Zu verbesserter Wärmeableitung geht der Trägerbereich in Arme über, die ebenfalls aus dem Verguss herausführen.

Der Erfindung liegt dagegen die technische Problemstellung zugrunde, einen Ereignisdetektor gattungsgemäßer Art so auszulegen, dass er schon im Interesse geringeren Raumbedarfes auch ohne Energiespeicher aber dennoch sogar mit Daueranzeige arbeitet.

Diese Aufgabe ist erfindungsgemäß mit den Merkmalen des unabhängigen Anspruches gelöst.

Mit jedem insbesondere manuell ausgelösten Hub verlagert sich ein magnetisch bistabiles Schaltelement relativ zu einem magnetischen Dipol vorübergehend aus dem Feldbereich des einen in den des anderen Poles, und dann - etwa federbelastet - wieder zurück. Dabei wird mit Verlassen des einen Magnetfeldes und Eintritt in das des anderen Magnetpoles eine Barkhausen-Aktivierungsschwelle im Schaltelement überschritten, die infolge dieser Feldänderung zu einem, vom zeitlichen Feldgradienten praktisch unabhängigen, Induktionsspannungsimpuls an der Sensorspule führt; und dann kehrt das Schaltelement, etwa federbelastet, wieder in das zuvor verlassene Magnetfeld zurück, um von diesem regeneriert zu werden.

Bei solchem bistabilen magnetischen Schaltelement handelt es sich um ein kurzes drahtförmiges Gebilde mit einem unter elastischer Zugspannung stehenden weichmagnetischen Kern. Der ist beim so genannten Wiegand-Draht umgeben von einer plastisch verförmten hartmagnetischen Mantelzone; oder beim so genannten Impulsdraht von einem Verbundmaterial, das infolge unterschiedlicher physikalischer Eigenschaften seiner Legierungspartner die elastische Zugspannung auf den Kernbereich ausübt. In beiden Fällen führt das Überschreiten eines Aktivierungsfeldwertes seitens des externen Magnetfeldes zu sprungartigem Umorientieren von Barkhausenzonen im mechanisch vorgespannten weichmagnetischen Kernmaterial. Der starke Gradient dieser Feldänderung führt zu einer Induktionsspannung in der das Schaltelement koaxial umgebenden Sensorspule. Bei Rückkehr des Schaltelementes in das gegenpolige Magnetfeld wird kein solcher Barkhauseneffekt ausgelöst, sondern der Magnetisierungszustand des Kernmaterials in die Ausgangssituation zurückgeführt.

So liefert ein Bewegungs-Zyklus gerade einen Ereignisimpuls an eine nichtflüchtige Zähl- und Speicherschaltung, die durch eben diesen Ereignisimpuls vorübergehend mit Betriebsenergie für die Verarbeitung des aktuellen Ereignisimpulses versorgt wird und im Übrigen abgeschaltet (nämlich im Schlafmodus) verharrt. Solch eine Schaltung kann besonders verbrauchsarm als Microcontroller oder in ASIC ausgelegt werden.

Das Zählergebnis und gegebenenfalls daraus abgeleitete Informationen (wie etwa Grenzwertwarnungen) können ständig visuell dargeboten werden, da eine bistabile Anzeigeeinrichtung an die normalerweise nicht in Betrieb befindlichen Zähl-, Verarbeitungs- und Speicherschaltungen angeschlossen ist. Bei der handelt es sich um eine reflektierende, also passive und deshalb auch in heller Umgebung gut ablesbare sowie besonders leistungsarme beziehungsweise sogar keiner Erhaltungsspannung bedürfende Anzeige.

Bevorzugt wird auf ein Display mit unterschiedlich elektrisch geladenen Partikeln in Mikrokapseln mit transparentem zähflüssigem Polymer hinter einem durchsichtigen Substrat zurückgegriffen, wie im Falle des so genannten ePaper. Denn es benötigt zur Anzeige keine Energie, nur während eines Wechsels in der momentanen Anzeige - hier etwa nur bei Auftreten eines Ereignisimpulses.

Besonders geringer Einbauraum für das Display wird benötigt, wenn solch elektronisches Papier hinter einer Folie als Substrat ausgebildet wird, die in Anpassung an ihre Gehäuse-Umgebung auch gewölbt eingebaut werden kann. Hinter der Folie kann neben der Anzeige auch wenigstens die Schaltung etwa als blanker Chip in Oberflächenmontage unter Kunststoffverguss aufgebaut werden, und bei entsprechender räumlicher Anordnung unter Umständen zusätzlich noch das Schaltelement mit seiner Sensorspule. Eine Ausführung des ePapier-Display hinter einer dünnen Glasscheibe als Substrat würde andererseits ein besonders kratzfestes Display ergeben; wobei die Glasscheibe rückwärtig, abseits des Display, auch gleich mit der Zähl- und Speicherschaltung in bewährter Chip-on-Glass-Aufbautechnik bestückt werden könnte.

Lediglich für den Fall, dass in längeren Zeiträumen zwischen dem Auftreten von aufeinander folgenden Ereignisimpulsen eine Signalverarbeitung und gegebenenfalls eine Aktualisierung deren Anzeige erfolgen muss, ist das System zusätzlich mit einer Primär- oder Sekundär-Batterie für den Schaltungsbetrieb und die Displayumsteuerung auszustatten. Der Ereignisdetektor selbst arbeitet batterielos; womit abgesehen von der Einbauraumersparnis auch das Problem einer sachgerechten Entsorgung einer Batterie am Ende ihrer Lebensdauer oder bei Beendigung einer Gerätebenutzung obsolet wird.

Das Schaltelement mit umgebender Sensorspule samt daran angeschlossener Schaltung und gegebenenfalls ein Display einerseits und andererseits der Magnet, vorzugsweise ein Permanentmagnet, benötigen derart geringen Einbauraum, dass sie problemlos in der Betätigungskappe etwa eines Medikamentenspenders unterzubringen sind. Dabei wird der Magnet vorteilhafter Weise am beweglichen Funktionselement (Gestänge oder Kolben) angebracht, damit untereinander zu verdrahtende Schaltungen dagegen stationär innerhalb des umgebenden Gehäuses angeordnet werden können. Das ergibt bei Medikamenten-Applikationen einen kleinbauenden Dosiszähler, etwa für Asthma- und dergleichen Beatmungs-Inhalatoren oder Insulin-Injektoren. Andere erfindungsgemäß vorteilhafte Einsatzmöglichkeiten sind die Ausstattung etwa von Sportschuhen mit solchen Ereignisdetektoren als Schrittzählern.

Ein Automotive-Einsatz dieser grundsätzlich batterielos arbeitenden Ereignisdetektoren erbringt den besondern Vorteil, auch nach Abschalten der Bordspannung noch Ereignisse erfassen und darbieten zu können, so dass auch nach Betriebsende keine Ereignisse oder Zustandsanzeigen untergehen.

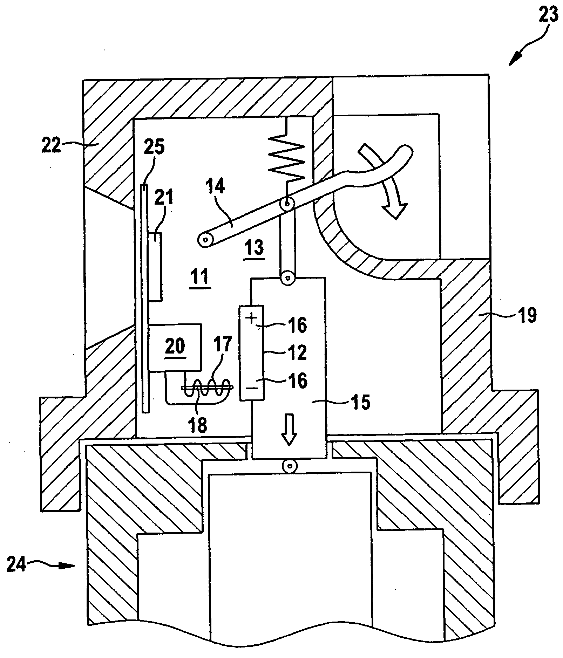

Zusätzliche Weiterbildungen und Abwandlungen zur erfindungsgemäßen Lösung ergeben sich aus den weiteren Ansprüchen und, auch unter Berücksichtigung deren Vorteilen, aus nachstehender Beschreibung eines in der Zeichnung unmaßstäblich stark vergrößert, auf das Funktionswesentliche reduziert, skizzierten bevorzugten Realisierungsbeispieles zur Erfindung. Die einzige Figur der Zeichnung veranschaulicht in abgebrochenem Axial-Längsschnitt die Ausstattung eines Medikamentenspenders mit in eine Kappe integrierter Hub-, also Betätigungserfassung.

Der skizzierte Ereignisdetektor 11 ist für Erfassen und Anzeigen, zumal manuell hervorgerufener, oszillierender linearer oder nichtlinearer Bewegungen, insbesondere in Form von Kolbenhüben oder von Hebel-Schwenkbewegungen, ausgelegt. Deren mit einem Magneten 12, vorzugsweise einem beliebig geformten Permanentmagneten, ausgestattetes bewegliches Funktionselement 13 kann demzufolge ein etwa durch manuelle Betätigung verschwenkbares Gestänge 14 sein, oder wie skizziert etwa ein Teil eines dadurch bewegten Kolbens 15 selbst. Die beiden Magnetpole 16 des Magneten 12 sind gegeneinander in Bewegungsrichtung des Funktionselementes 13 und im Mittel etwa um die Strecke versetzt, die dem jeweiligen kreisbogenförmigen beziehungsweise linearen Hub eines Betätigungszyklus entspricht.

Relativ zum beweglich angeordneten Magneten 12 gerätefest, und vorzugsweise orthogonal zur Richtung der oszillierenden Bewegung des Magneten 12, ist das von einer Sensorspule 17 umgebene kurze lineare, magnetisch bistabile Barkhausen-Schaltelement 18 stationär im Innern eines Gehäuses 19 angeordnet. Grundsätzlich können im Rahmen vorliegender Erfindung aber auch umgekehrt der Magnet 12 stationär und der Ereignisdetektor 11 im Übrigen dagegen beweglich installiert sein. Auch muss der Magnet 12 nicht zwingend ein linear, hufeisenförmig oder sonstwie definiert gestalteter Permanentmagnet sein; bei Vorhandensein einer gesonderten Energiequelle, etwa zu kontinuierlichem Betrieb der Schaltung 20, können Umsteuerfelder 16+ / 16- auch von einem Elektromagneten generiert sein. Das kann z.B. den Vorteil haben, diese Feldstärken für zuverlässiges Schaltverhalten über eine gesteuerte Stromeinspeisung individuell an die Einbaugegebenheiten anpassen zu können.

An die Sensorspule 17 ist eine Zähl- und nichtflüchtige, permanente Zählerstandsspeicher-Schaltung 20 etwa in E²PROM- oder Flash-Technologie angeschlossen. Deren Information, insbesondere ein saldiertes Impuls-Zählergebnis beziehungsweise gegebenenfalls eine daraus abgeleitete Nachricht, wird nach außen mittels eines bistabilen passiven Display 21 dargeboten, das etwa in eine Gehäuse-Wand 22 - plan oder ihrer Kontur folgend - eingelassen ist. Über ein Interface ist ein Programmier- oder Auslesezugriff zur Speicherschaltung 20 betreibbar. Unabhängig davon ist es zweckmäßig, die Schaltung 20 über ein manuell eingegebenes, definiertes Impulsfolgemuster beeinflussen, etwa im Zuge eines Behälteraustausches wieder auf einen Anfangszählwert zurücksetzen, zu können.

Unter dem Einfluss hinreichender magnetischer Feldstärke eines der beiden Magnet-Pole 16, nachfolgend auch als Aktivierungsfeld 16+ bezeichnet, werden jedenfalls die Barkhausensprünge im Schaltelement 18 ausgelöst. Die daraus resultierende Magnetfeldänderung beim Schaltelement 18 induziert einen Ereignisimpuls in der Sensorspule 17. Dieser Spannungsimpuls aktiviert die Schaltung 20, um beispielsweise die bisher abgespeicherte Impulszahl um Eins zu erhöhen. Zugleich wird von dem Spannungsimpuls das Display 21 aktiviert, und dessen von außerhalb des Gehäuses 19 wahrnehmbare Information wird entsprechend aktualisiert. Mit Abklingen des Induktionsspannungsimpulses fallen die Schaltung 20 und das Display 21 in ihre energiebedarfsfreien Wartestellungs- oder Schlaf-Betriebszustände zurück, letzteres unter Beibehalten der Darbietung seiner nun aktualisierten Anzeige.

Wenn das Schaltelement 18 relativ aus dem Aktivierungsfeld 16+ heraus zum gegenpoligen Feld 16- hin bewegt wird, ändert sich insofern zunächst nichts mehr, da die Barkhausen-Umwandlung bereits erfolgte.

Wenn aber bei weiterem relativen Verlagern des Schaltelementes 18 in das Regenerierungsfeld 16- hinein dieses eine kritische Stärke erreicht, wird im Schaltelement 18 der Barkhauseneffekt zurückgeführt, also das Schaltelement 18 reaktiviert. Dabei bleibt es zunächst auch noch, wenn das Schaltelement 18 später aus diesem Magnetfeld 16- wieder heraus und zum Feld 16+ hin verlagert wird; bis mit relativem Eindringen in das andere Magnetfeld 16+ dieses wieder stark genug wird zum erneuten Aktivieren des Barkhauseneffektes im Schaltelement 18, also zum Ausgeben des nächsten Ereignisimpulses an der Sensorspule 17. Und so fort.

Bei dem den Ereignisdetektor 11 beinhaltenden Gehäuse 19 kann es sich insbesondere um die mit einem manuell zu betätigenden, zug- oder druckfederbelasteten Pumpen-Gestänge 14 bestückte Kappe 23 eines Medikamentenspenders 24 handeln, mit Anordnung des Magneten 12 am Gestänge 14 oder wie skizziert beim Pumpen-Kolben 15. Bei solchem kolbenbetätigten Medikamentenspender 24 kann es sich insbesondere um einen Sprüh-Inhalator, eine Pillenausgabe oder einen Impfstoffbehälter handeln. Auf dem Display 21 wird die, Ereignisimpulse auslösende, Medikamentennahme angezeigt, etwa als Absolutzahl oder bezogen auf eine Bezugsgröße wie eine Tagesration oder einen kritischen Maximalwert.

Grundsätzlich ohne Batterie-Versorgungs- und -Entsorgungsprobleme berücksichtigen und Batterie-Einbauraum vorhalten zu müssen, speist also bei einem kleinbauenden Ereignisdetektor 11 mit von einem Magneten 12 bistabil ummagnetisierbarem Schaltelement 18 in einer einen Ereignisimpuls liefernden Sensorspule 17 eine Zähl-, Auswerte- und Anzeige-Schaltung 20 zu erfindungsgemäßem Erfassen oszillierender, insbesondere durch Körperkraft generierter linearer oder bogenförmiger Bewegungen. Dafür ist das Schaltelement 18 relativ zum Magneten 12 zwischen den Aktivierungs- und Regenerierungs-Feldern 16+ / 16- dessen beiden Polen 16 hin und her verlagerbar. Damit kann insbesondere die Betätigung eines Inhalations- oder eines Injektions-Kolbens 15 in einem Medikamentenspender 24 erfasst und dadurch eine Medikamentendosis überwacht werden. Zur Ereignis-Anzeige ist an die Schaltung 20 ein ebenfalls bistabiles Display 21 in der Technologie eines ePapieres beziehungsweise der eTinte angeschlossen, das seine nur zum Anzeigewechsel erforderliche Energie ebenfalls aus dem Ereignisimpuls der Sensorspule 17 bezieht. Die Schaltung 20 kann raumsparend auf der betrachterabgelegenen Rückseite eines Glas- oder Folien-Substrates 25 des ePaper-Display 21 aufgebaut sein.

### Bezugszeichenliste

- 11: Ereignisdetektor (mit 12; 18, 17)
- 12: Magnet (an 13)
- 13: Funktionselement (14, 15; in 19)
- 14: Gestänge (an 13)
- 15: Kolben (an 14)
- 16: Pole (von 12); +/- Felder bei 16
- 17: Sensorspule (auf 18)
- 18: Schaltelement (von 11)
- 19: Gehäuse (um 11)
- 20: Schaltung (hinter 17)
- 21: Display (hinter 20, in 22)
- 22: Wand (von 19, 23)
- 23: Kappe (mit 11, 14 auf 24)
- 24: Medikamentenspender (unter 23)
- 25: Substrat (für 21 und gegebenenfalls 20 / 18)

## Patentansprüche

1. Ereignisdetektor (11) mit einem, von den Magnet-Feldern (16+ / 16-) eines relativ zu einem Schaltelement (18) hin und her verlagerbaren Magneten (12), bistabil ummagnetisierbaren Barkhausen-Schaltelement (18) in einer Sensorspule (17), mit einer Schaltung (20) und mit einem Display (21), **dadurch gekennzeichnet, dass** die Schaltung (20) zusammen mit einem passiven, keiner Erhaltungsspannung bedürfendes Display (21) auf ein Glas- oder Folien-Substrat (25) aufgebaut und bis zum Abklingen eines Spannungsimpulses aus der Sensorspule (17) von diesem aktivierbar sind.

2. Ereignisdetektor nach dem vorangehenden Anspruch, **dadurch gekennzeichnet, dass** der Magnet (12) an einem beweglichen Funktionselement (13), insbesondere einem Kolben (15) oder einem Betätigungs-Gestänge (14), angeordnet ist.

3. Ereignisdetektor nach einem der vorangehenden Ansprüche, **dadurch gekennzeichnet, dass** das Schaltelement (18) mit seiner Sensorspule (17) relativ zum Magneten (12) in einem Gehäuse (19) fest angeordnet ist.

4. Ereignisdetektor nach einem der vorangehenden Ansprüche, **dadurch gekennzeichnet, dass** an die Sensorspule (17) eine Zähl- und nichtflüchtige, permanente Zählerstandsspeicher-Schaltung (20), etwa in E²PROM- oder Flash-Technologie, angeschlossen ist, deren Information, insbesondere ein saldiertes Impuls-Zählergebnis beziehungsweise gegebenenfalls eine daraus abgeleitete Nachricht, mittels des bistabilen passiven Display (21) darbietbar ist.

5. Ereignisdetektor nach dem vorangehenden Anspruch, **dadurch gekennzeichnet, dass** für das Display (21) eine ePaper- beziehungsweise eInk-Technologie eingesetzt ist.

6. Ereignisdetektor nach einem der beiden vorangehenden Ansprüche, **dadurch gekennzeichnet, dass** hinter dem Folien-Substrat (25) die Schaltung (20) als Chip in Oberflächenmontage unter Kunststoffverguss aufgebaut ist.

7. Ereignisdetektor nach Anspruch 3, **dadurch gekennzeichnet, dass** das Gehäuse (19) eine Kappe (23) mit Kolbenbetätigungs-Gestänge (14) an einem Medikamentenspender (24) ist.

8. Ereignisdetektor nach dem vorangehenden Anspruch, **dadurch gekennzeichnet, dass** die Kappe (23) mit einem bistabilen gewölbten Display (21) ausgestattet ist.

## Claims

1. Event detector (11) having a Barkhausen switching element (18) in a sensor coil (17), which switching element can be remagnetized in a bistable manner by the magnetic fields (16+/16-) of a magnet (12) which can be moved back and forth relative to a switching element (18), having a circuit (20) and a display (21), **characterized in that** the circuit (20), together with a passive display (21) which does not require a float voltage, are constructed on a glass or film substrate (25) and can be activated by a voltage pulse from the sensor coil (17) until said voltage pulse decays.

2. Event detector according to the preceding claim, **characterized in that** the magnet (12) is arranged on a movable functional element (13), in particular a piston (15) or an operating linkage (14).

3. Event detector according to one of the preceding claims, **characterized in that** the switching element (18), with its sensor coil (17), is arranged fixed relative to the magnet (12) in a housing (19).

4. Event detector according to one of the preceding claims, **characterized in that** a counting and nonvolatile permanent counter reading memory circuit (20), for instance in E²PROM or flash technology, is connected to the sensor coil (17), the information from which circuit, in particular a balanced pulse counting result or possibly a message derived therefrom, can be presented using the bistable passive display (21).

5. Event detector according to the preceding claim, **characterized in that** e-paper or e-ink technology is used for the display (21).

6. Event detector according to one of the two preceding claims, **characterized in that** the circuit (20) is constructed behind the film substrate (25) as a chip using surface-mounting with plastic potting.

7. Event detector according to Claim 3, **characterized in that** the housing (19) is a cap (23) with a piston operating linkage (14) on a medicament dispenser (24).

8. Event detector according to the preceding claim, **characterized in that** the cap (23) is equipped with a bistable curved display (21).

## Revendications

1. Détecteur d'événement (11) comprenant un élément de commutation de Barkhausen (18) dans une bobine de détection (17), dont l'aimantation peut être inversée de manière bistable par les champs magnétiques (16+/16-) d'un aimant (12) qui peut effectuer un mouvement de va-et-vient par rapport à un élément de commutation (18), comprenant un circuit (20) et comprenant un afficheur (21), **caractérisé en ce que** le circuit (20) conjointement avec un afficheur (21) passif ne nécessitant aucune tension de maintien sont construits sur un substrat en verre ou en film (25) et peuvent être activés par la bobine de détection (17) jusqu'à l'affaiblissement d'une impulsion de tension provenant de celle-ci.

2. Détecteur d'événement selon la revendication précédente, **caractérisé en ce que** l'aimant (12) est disposé sur un élément fonctionnel (13) mobile, notamment un piston (15) ou une tige d'actionnement (14).

3. Détecteur d'événement selon l'une des revendications précédentes, **caractérisé en ce que** l'élément de commutation (18) avec sa bobine de détection (17) est monté dans un boîtier (19) en position fixe par rapport à l'aimant (12).

4. Détecteur d'événement selon l'une des revendications précédentes, **caractérisé en ce qu'**un circuit de mémoire d'état de compteur (20) permanent de comptage et non volatile, par exemple en technologie E2PROM ou Flash, est raccordé à la bobine de détection (17), dont les informations, notamment le résultat d'un compteur d'impulsions totalisateur ou éventuellement un message qui en est dérivé, peuvent être représentées au moyen de l'afficheur passif bistable (21).

5. Détecteur d'événement selon l'une des revendications précédentes, **caractérisé en ce qu'**une technologie de papier électronique ou d'encre électronique est utilisée pour l'afficheur (21).

6. Détecteur d'événement selon l'une des revendications précédentes, **caractérisé en ce que** derrière le substrat en film (25), le circuit (20) est construit sous la forme d'une puce en montage en surface sous scellement de matière plastique.

7. Détecteur d'événement selon la revendication 3, **caractérisé en ce que** le boîtier (19) est un capuchon (23) muni d'une tige d'actionnement de piston (14) sur un distributeur de médicament (24).

8. Détecteur d'événement selon la revendication précédente, **caractérisé en ce que** le capuchon (23) est équipé d'un afficheur (21) bombé bistable.
